# EUROPÄISCHE PATENTANMELDUNG

(11) **EP 3 293 155 A1**
(43) Veröffentlichungstag der Anmeldung: **14.03.2018**
(21) Anmeldenummer: 17001217.3
(22) Anmeldetag: 17.07.2017
(51) Int. Cl.: C03B 7/10

(54) **TROPFENSCHERE FÜR EINE GLASFORMMASCHINE**

(30) Priorität: 08.09.2016 DE 202016005523 U; 26.10.2016 DE 202016006611 U
(71) Anmelder: Rolf Themann & Partner SA, 1273 Luxembourg (LU)
(72) Erfinder: Themann, Rolf, 51101 Turnov (CZ)
(74) Vertreter: Lelgemann, Karl-Heinz

(57) **Zusammenfassung**

Eine Tropfenschere für eine Glasformmaschine ist unterhalb eines Tropfrings einer Speiservorrichtung der Glasformmaschine angeordnet und hat Scherenblätter (4), mittels denen unterhalb des Tropfrings Glastropfen von einem durch den Tropfring hindurchtretenden Glasstrang abtrennbar sind, und eine Sprühvorrichtung (7) für Kühl- und Schmiermittel, mittels der die Scherenblätter (4) der Tropfenschere kühl- und schmierbar sind.

Um zu vermeiden, dass Kühl- und Schmiermittel an die Unterseite des Tropfrings gerät und um eine exakte Schmierung und Kühlung der Scherenblätter der Tropfenschere langfristig und zuverlässig zu sichern, wird vorgeschlagen, dass Sprühdüsen der Sprühvorrichtung (7) so in bzw. an den Scherenblättern (4) der Tropfenschere ausgebildet oder angeordnet sind, dass das Kühl- und Schmiermittel parallel zur bzw. in der Bewegungsebene der sich aufeinander zu und voneinander weg bewegenden Scherenblätter (4) auf die Scherenblätter (4) richtbar ist.

## Beschreibung

Die Erfindung bezieht sich auf eine Tropfenschere für eine Glasformmaschine, die unterhalb eines Tropfrings einer Speiservorrichtung der Glasformmaschine angeordnet ist und die Scherenblätter, mittels denen unterhalb des Tropfrings Glastropfen von einem durch den Tropfring hindurchtretenden Glasstrang abtrennbar sind, und eine Sprühvorrichtung für Kühl- und Schmiermittel aufweist, mittels der die Scherenblätter der Tropfenschere kühl- und schmierbar sind.

Die Erfindung bezieht sich auch auf eine Tropfenschere für eine Glasformmaschine, die unterhalb eines Tropfrings einer Speiservorrichtung der Glasformmaschine angeordnet ist und die Scherenblätter, mittels denen unterhalb des Tropfrings Glastropfen von einem durch den Tropfring hindurchtretenden Glasstrang abtrennbar sind, Messerhalter, an denen die Scherenblätter gehaltert sind, und eine Sprühvorrichtung für Kühl- und Schmiermittel aufweist, mittels der die Scherenblätter der Tropfenschere kühl- und schmierbar sind.

Bei der Tropfenschere kann es sich sowohl um eine Tropfenschere mit parallel schneidenden Scherenblättern als auch um eine Tropfenschere mit angular schneidenden Scherenblättern handeln. Eine derartige Tropfenschere kommt zum Schneiden eines oder mehrerer Glastropfen für Hohlglas- und Pressglasmaschinen zum Einsatz.

Mittels einer derartigen Tropfenschere sollen entsprechend portionierte Glastropfen mit exaktem vorgegebenem Gewicht geschnitten werden. Eine derartige Tropfenschere, sei es in angularer oder auch paralleler Ausführung und Funktionsweise, ist üblicherweise, wie vorstehend bereits erwähnt, unterhalb einer Speiservorrichtung der Glasformmaschine angeordnet. Die Speiservorrichtung hat gewöhnlich einen Plunger, ein Tonrohr und eben die Tropfenschere. Mittels der Tropfenschere kann - je nach Ausführung der Tropfenschere - gleichzeitig eine beliebige Anzahl von Glastropfen, typischerweise 1 bis 5 Glastropfen, geschnitten werden, und zwar aus Glassträngen, die durch den Tropfring gepresst werden. Hierbei können Glastropfen in genau definierten Portionen geschnitten werden.

Im Betrieb der Tropfenschere erhitzen sich die Scherenblätter derselben sehr stark, weil sie ständig die heißen Glastropfen schneiden und sie unmittelbar unterhalb des Auslasses bzw. Tropfrings der Speiservorrichtung der Glasformmaschine angeordnet sind und entsprechend dort bei hohen Temperaturen betrieben werden. Zur Kühlung der Scherenblätter der Tropfenschere ist die vorstehend bereits erwähnte Sprühvorrichtung vorgesehen. Mittels dieser Sprühvorrichtung können die Scherenblätter einerseits gekühlt werden, wobei darüber hinaus eine Schmierung realisierbar ist, mittels der ein Kleben zwischen den üblicherweise metallischen Scherenblättern und den flüssigen Glastropfen vermieden werden kann. Entsprechend ist eine laufende Schmierung der Scherenblätter erforderlich.

Aus dem Stand der Technik sind Sprühvorrichtungen bekannt, die unterhalb des Tropfrings der Glasformmaschine und oberhalb der Scherenblätter angeordnet sind. Eine derartige Sprühvorrichtung besteht aus Sprühdüsen, einer Haltevorrichtung und einer Zufuhranlage für Druckluft, Wasser und/oder Öl. Hierdurch kann durch Besprühung der Scherenblätter von oben eine Kühlung und Schmierung der Scherenblätter bewerkstelligt werden. Aufgrund der Anordnung der Sprühvorrichtung zwischen den Scherenblättern einerseits und dem Tropfring andererseits wird der Abstand zwischen den Scherenblättern zum Tropfring vergleichsweise groß, was zur Folge hat, dass der Glastropfen vergleichsweise weit unterhalb des Tropfrings und nicht unmittelbar an dessen Austritt geschnitten wird.

Alternativ ist es möglich, die analog gestaltete Sprühvorrichtung unterhalb der Scherenblätter anzuordnen. Dann sind die Sprühdüsen der Sprühvorrichtung so ausgerichtet, dass sie das Kühl- und Schmiermittel in aufwärtiger Richtung zu den Scherenblättern sprühen bzw. abstrahlen. Hierbei ergibt sich zwangsläufig der Nachteil, dass häufig Kühl- und Schmiermittel an die Unterseite des Tropfrings gerät, wodurch eine Abkühlung des Tropfrings unvermeidlich ist, welche wiederum nachteilige Auswirkungen auf die Homogenität des durch den Tropfring hindurchtretenden Glasstrangs zur Folge hat und sogar zum örtlichen Erstarren oder Abkühlen von bereits geschmolzenem Glas im Tropfring führen kann.

Ausgehend von dem vorstehend geschilderten Stand der Technik liegt der Erfindung die Aufgabe zugrunde, eine Tropfenschere für eine Glasformmaschine der eingangs geschilderten Art zur Verfügung zu stellen, bei der die vorstehend geschilderten Nachteile nicht auftreten und bei der darüber hinaus eine exakte Schmierung und Kühlung der Scherenblätter der Tropfenschere langfristig und zuverlässig realisierbar ist.

Diese Aufgabe wird erfindungsgemäß dadurch gelöst, dass Sprühdüsen der Sprühvorrichtung so in bzw. an den Scherenblättern der Tropfenschere ausgebildet oder angeordnet sind, dass das Kühl- und Schmiermittel parallel zur bzw. in der Bewegungsebene der sich aufeinander zu und voneinander weg bewegenden Scherenblätter auf die Scherenblätter richtbar ist. Entsprechend wird ein Sprühen des Kühl- und Schmiermittels von oben oder von unten vermieden. Vielmehr wird das Sprühmittel etwa waagerecht in der Achse der sich bewegenden Scherenblätter selbst abgestrahlt bzw. versprüht. Die Scherenblätter können unmittelbar am Auslass des Tropfrings angeordnet sein, d.h. der Abstand zwischen den Scherenblättern einerseits und der Auslassseite des Tropfrings andererseits ist minimierbar. Dennoch wird durch die erfindungsgemäße Ausrichtung der Abstrahlung des Kühl- und Schmiermittels verhindert, dass der Tropfring hiermit besprüht und dadurch abgekühlt wird. Entsprechend kann bei ohne weiteres realisierbarer Kühlung der Scherenblätter das Abschneiden des Glastropfens unmittelbar unterhalb des Auslasses des Tropfrings erfolgen, ohne dass ein Abkühlen des Tropfrings riskiert wird.

Alternativ wird diese Aufgabe erfindungsgemäß dadurch gelöst, dass Sprühdüsen der Sprühvorrichtung so in bzw. an den Messerhaltern der Tropfenschere ausgebildet oder angeordnet sind, dass das Kühl- und Schmiermittel auf die sich aufeinander zu und voneinander weg bewegenden Scherenblätter richtbar ist. Entsprechend wird ein Sprühen des Kühl- und Schmiermittels von oben oder von unten vermieden. Vielmehr wird das Sprühmittel von den Messerhaltern direkt auf die sich bewegenden Scherenblätter selbst abgestrahlt bzw. versprüht. Die Scherenblätter können unmittelbar am Auslass des Tropfrings angeordnet sein, d.h. der Abstand zwischen den Scherenblättern einerseits und der Auslassseite des Tropfrings andererseits ist minimierbar. Dennoch wird durch die erfindungsgemäße Ausrichtung der Abstrahlung des Kühl- und Schmiermittels verhindert, dass der Tropfring hiermit besprüht und dadurch abgekühlt wird. Entsprechend kann bei ohne weiteres realisierbarer Kühlung der Scherenblätter das Abschneiden des Glastropfens unmittelbar unterhalb des Auslasses des Tropfrings erfolgen, ohne dass ein Abkühlen des Tropfrings riskiert wird.

Gemäß einer vorteilhaften Weiterbildung der Erfindung sind die Sprühdüsen der Sprühvorrichtung einstückig in den Scherenblättern bzw. den Messerhaltern der Tropfenschere integriert. Entsprechend können auch die Zuführungen bzw. Fluidkanäle in die Scherenblätter bzw. die Messerhalter integriert sein.

Alternativ ist es möglich, die Sprühdüsen der Sprühvorrichtung und den Sprühdüsen vorgeordnete Kanäle, Anschlüsse derselben auswechselbar in oder an den Scherenblättern bzw. Messerhaltern der Tropfenschere anzuordnen.

Durch die Ausgestaltung der Sprühvorrichtung unmittelbar in den Scherenblättern bzw. Messerhaltern bzw. durch die Anordnung der Sprühvorrichtung unmittelbar an den Scherenblättern ist es möglich, den Abstand zwischen dem Auslass der Sprühvorrichtung und den zu kühlenden bzw. zu schmierenden Schneiden bzw. Schneidflächen der Scherenblätter zu minimieren. Aufgrund dieses minimierten Abstands ist eine im Vergleich zum Stand der Technik gezieltere und exaktere Kühlung der zu kühlenden Schneidflächen bzw. Schneiden der Scherenblätter möglich. Hierdurch kann die Kühlung und die Schmierung der Schneiden bzw. Schneidflächen der Scherenblätter optimiert werden. Aufgrund der gezielten Abstrahlung des Kühl- und Schmiermittels auf die Scherenblätter bzw. deren Schneiden und Schneidflächen erfolgt - wenn überhaupt - nur noch eine minimale Benetzung der Glastropfen, was zu qualitativ besseren Glastropfen für die sich anschließenden Produktionsvorgänge führt. Aufgrund der genauen Ausrichtung der Abstrahlung des Kühl- und Schmiermittels ergibt sich eine Reduzierung des Kühl- und Schmiermittelverbrauchs, ein geringerer Verschleiß an den Scherenblättern und damit eine höhere Lebensdauer derselben.

Zweckmäßigerweise erfolgt der Anschluss der Sprühdüsen der Sprühvorrichtung durch zumindest einen im bzw. am Scherenblatt bzw. Messerhalter ausgebildeten bzw. angeordneten Fluidkanal, durch den hindurch das Schmier- und Kühlmittel den Sprühdüsen zugeführt werden kann.

Gemäß einer weiteren vorteilhaften Weiterbildung der erfindungsgemäßen Tropfenschere sind die Sprühdüsen oder der zumindest eine Fluidkanal des Scherenblatts bzw. des Messerhalters der Tropfenschere mittels Zuleitungskanälen mit Kühl- und Schmiermittel versorgbar, die in einem dem Scherenblatt bzw. dem Messerhalter zugeordneten Messerarm der Tropfenschere ausgebildet sind. Hierdurch kann das Kühl- und Schmiermittel direkt durch den Messerarm dem scherenblattseitigen bzw. messerhalterseitigen Fluidkanal bzw. den scherenblattseitigen bzw. messerhalterseitigen Sprühdüsen zugeführt werden. Das Scherenblatt bzw. der Messerhalter ist dann so konstruiert, dass das Kühl- und Schmiermittel aus den messerarmseitigen Zuleitungskanälen unmittelbar durch die im Scherenblatt bzw. im Messerarm ausgebildeten Fluidkanäle den ebenfalls im Scherenblatt bzw. im Messerarm integrierten Sprühdüsen zugeleitet wird.

Vorteilhaft sind die Sprühdüsen der Sprühvorrichtung so angeordnet bzw. ausgerichtet, dass sie das Kühl- und Schmiermittel genau auf die Schneidflächen bzw. Schneiden der Scherenblätter ausrichten.

Gemäß einer weiteren vorteilhaften Ausgestaltung der erfindungsgemäßen Tropfenschere ist vorgesehen, dass eine Emulsion und die Druckluft des Kühl- und Schmiermittels den Sprühdüsen durch voneinander getrennte Fluid- und Zuleitungskanäle zuführbar ist, wobei dann die Mischung von Emulsion und Druckluft unmittelbar stromauf der Sprühdüsen stattfindet.

Erfindungsgemäß ist gemäß einer vorteilhaften Weiterbildung der Tropfenschere vorgesehen, dass deren Scherenblätter als Standardscherenblätter ausgebildet sind. Hierdurch kann der technisch-konstruktive sowie der wirtschaftliche Aufwand für die Tropfenschere erheblich reduziert werden.

Die Standardscherenblätter können im Falle der erfindungsgemäßen Tropfenschere oberhalb oder unterhalb der Sprühdüsen am Messerhalter angeordnet und befestigt werden, vorzugsweise verschraubt.

Im Folgenden wird die Erfindung anhand von Ausführungsformen unter Bezugnahme auf die Zeichnung näher erläutert.

Es zeigen:
- Figur 1: eine perspektivische Darstellung eines einen Messerhalter, Messerarme und Scherenblätter eines Ausführungsbeispiels einer erfindungsgemäßen Tropfenschere aufweisenden Bereichs einer Glasformmaschine;
- Figur 2: eine perspektivische Unteransicht des Messerhalters, des Messerarms und der Scherenblätter des in Figur 1 gezeigten Ausführungsbeispiels der erfindungsgemäßen Tropfenschere;
- Figur 3: eine teilweise geschnittene Darstellung eines Ausführungsbeispiels eines Scherenblatts der erfindungsgemäßen Tropfenschere;
- Figur 4: eine Unteransicht des in Figur 3 gezeigten Ausführungsbeispiels des Scherenblatts der erfindungsgemäßen Tropfenschere;
- Figur 5: eine Längsschnittdarstellung des in den Figuren 3 und 4 gezeigten Ausführungsbeispiels des Scherenblatts der erfindungsgemäßen Tropfenschere;
- Figur 6: eine perspektivische Darstellung von Messerhaltern, Messerarmen und Scherenblättern eines zweiten Ausführungsbeispiels einer erfindungsgemäßen Tropfenschere einer Glasformmaschine;
- Figur 7: eine perspektivische Unteransicht des Messerarms, der Messerhalter und der Scherenblätter des in Figur 6 gezeigten zweiten Ausführungsbeispiels der erfindungsgemäßen Tropfenschere; und
- Figur 8: eine geschnittene Darstellung eines Ausführungsbeispiels eines Messerhalters des zweiten Ausführungsbeispiels der erfindungsgemäßen Tropfenschere.

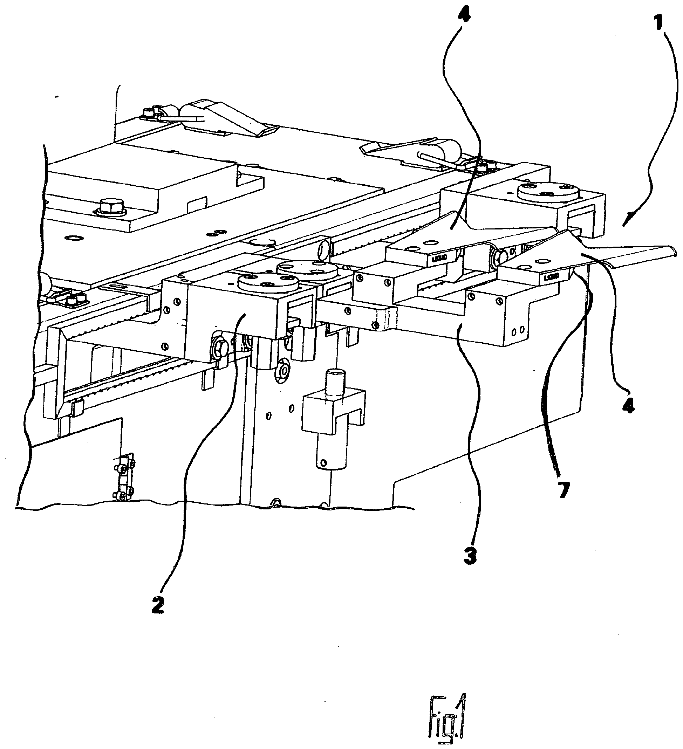

In Figur 1 ist derjenige Bereich einer Glasformmaschine teilweise dargestellt, der unterhalb eines Tropfrings einer Speiservorrichtung angeordnet ist. Weder der Tropfring noch die Speiservorrichtung sind in den Figuren 1 bis 5 gezeigt.

In diesem Bereich der Glasformmaschine ist eine erste Ausführungsform einer erfindungsgemäßen Tropfenschere 1 angeordnet, wobei in der perspektivischen Darstellung der Figur 1 an der Glasformmaschine angebrachte Messerhalter 2, ein in einem Messerhalter 2 gehalterter Messerarm 3 und zwei an dem Messerarm 3 angeordnete Scherenblätter 4 gezeigt sind, wobei diese beiden Scherenblätter 4 mit entsprechend gegenüberliegend angeordneten gleichartigen Scherenblättern die Tropfenschere 1 bilden.

Mittels der Scherenblätter 4 sind unterhalb des in Figur 1 nicht gezeigten Tropfrings Glastropfen von einem durch den Tropfring hindurchtretenden Glasstrang abtrennbar. Hierzu werden im in Figur 1 dargestellten Ausführungsbeispiel die beiden gezeigten Scherenblätter 4 auf zwei gegenüberliegend angeordnete und gelagerte entsprechende Scherenblätter zu bewegt, wobei dann im dargestellten Ausführungsbeispiel zwei Glastropfen von zwei aus einem entsprechend gestalteten Tropfring hindurchtretenden Glassträngen abgetrennt werden.

Im dargestellten Ausführungsbeispiel ist die Tropfenschere 1 als parallel schneidende Tropfenschere 1 ausgestaltet, wobei die einander zugeordneten Scherenblätter 4, die aufeinander zu und voneinander weg bewegt werden, sich auf derselben Bewegungsachse bewegen. Im Falle der in Figur 1 gezeigten Tropfenschere 1 wirkt somit das in der Figur rechts dargestellte Scherenblatt 4 mit einem diesem gegenüberliegend angeordneten entsprechenden Scherenblatt zusammen, wohingegen das in Figur 1 links dargestellte Scherenblatt 4 mit einem entsprechend diesem gegenüberliegend angeordneten Scherenblatt zusammenwirkt.

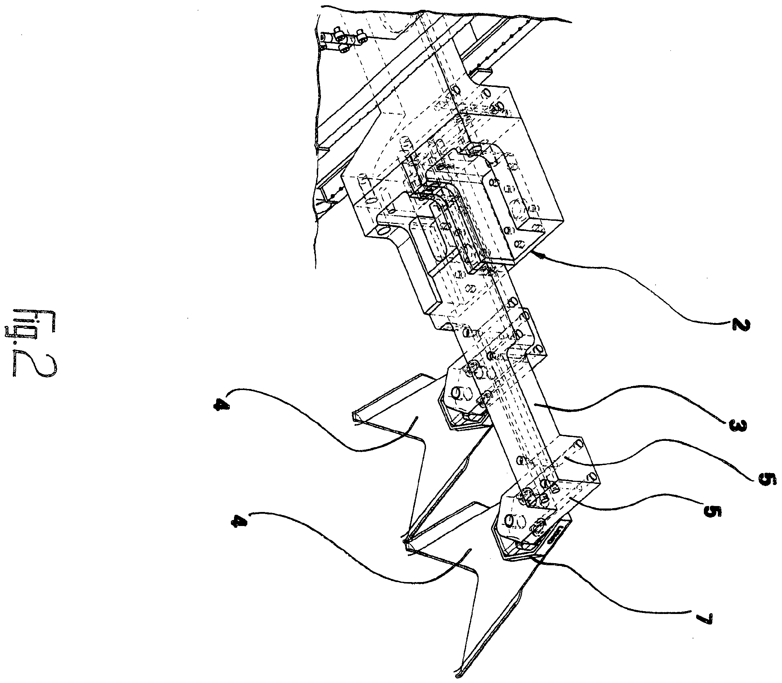

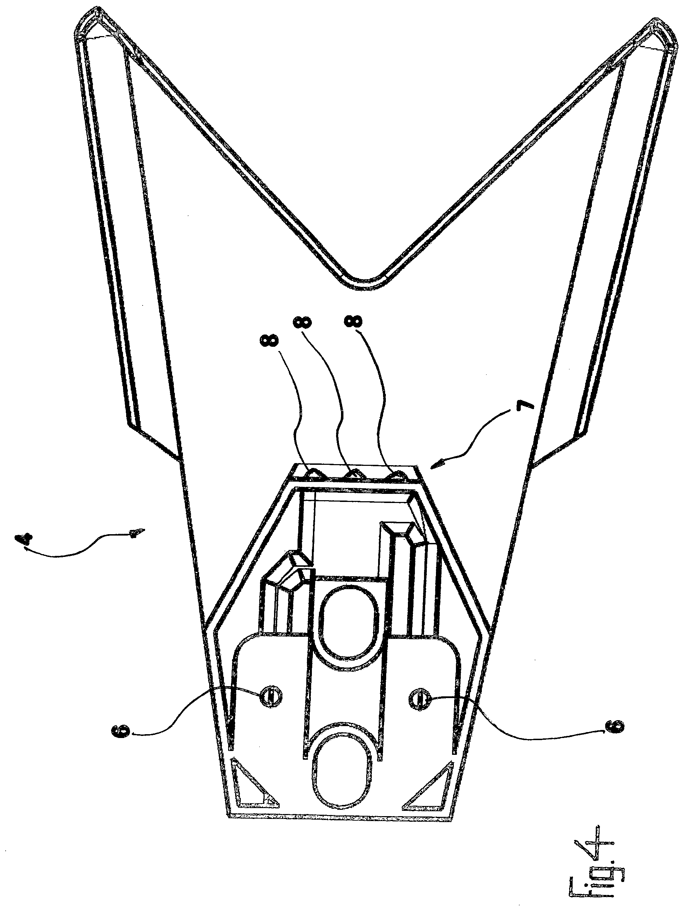

Aus der in Figur 2 gezeigten Unteransicht der Tropfenschere 1 bzw. des Messerhalters 2 derselben, ihres Messerarms 3 und ihrer Scherenblätter 4 geht hervor, dass der Messerhalter 2 und der Messerarm 3 von Zuleitungskanälen 5 durchdrungen sind, mittels denen zwei an der in Figur 4 gezeigten Unterseite des Scherenblatts 4 der Tropfenschere 1 vorgesehene Eintrittsöffnungen 6 einer scherenblattseitigen Sprühvorrichtung 7 mit Kühl- und Schmiermittel versorgbar sind.

Die Sprühvorrichtung 7 kann einstückig mit dem Scherenblatt 4 ausgestaltet sein oder sie kann lösbar und damit austauschbar mit dem Scherenblatt 4 verbunden sein.

Zu der Sprühvorrichtung 7 gehören Sprühdüsen 8, durch die hindurch das Kühl- und Schmiermittel aus der Sprühvorrichtung 7 abgestrahlt wird. Die Sprühdüsen 8 sind in Bezug auf das Scherenblatt 4 so angeordnet, dass sie das Kühl- und Schmiermittel parallel zur bzw. in der Bewegungsebene der sich aufeinander zu und voneinander weg bewegenden Scherenblätter 4 auf das jeweilige Scherenblatt 4 richten. Bei dem in den Figuren 1 bis 5 dargestellten Ausführungsbeispiel der Tropfenschere 1 ist die Anordnung der Sprühdüsen 8 der Sprühvorrichtung so vorgenommen, dass sie das Kühl- und Schmiermittel möglichst genau auf die Schneidfläche des jeweiligen Scherenblatts 4 ausrichten.

Da, wie sich insbesondere aus Figur 2 ergibt, die scherenblattseitige Sprühvorrichtung 7 unterhalb der Schneidebene des jeweiligen Scherenblatts 4 angeordnet ist, kann das Scherenblatt 4 gekühlt und geschmiert werden, obwohl das Scherenblatt 4 gleichzeitig unmittelbar unterhalb des in den Figuren nicht gezeigten Tropfrings angeordnet sein kann, so dass die Glastropfen unmittelbar unterhalb des Austritts des Tropfrings vom Glasstrang abgetrennt werden können. Da mittels der Sprühdüsen 8 der Sprühvorrichtung 7 das Kühl- und Schmiermittel quasi in bzw. parallel zur Bewegungsrichtung des Scherenblatts 4 abgestrahlt wird, gerät kein Kühl- und Schmiermittel an den in den Figuren nicht dargestellten Tropfring, so dass keine nachteiligen Eigenschaften auf die Homogenität des Glases verursacht werden, die darauf zurückgehen könnten, dass der Tropfring in unerwünschter Weise gekühlt würde.

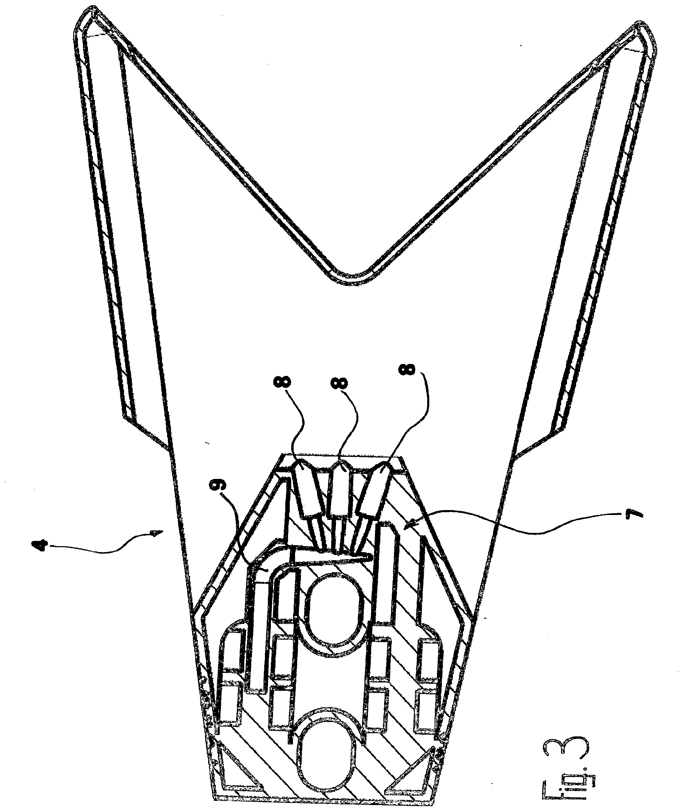

Durch die in Figur 4 gezeigten sprühvorrichtungsseitigen Eintrittsöffnungen 6 gerät das Kühl- und Schmiermittel in Fluidkanäle 9, und durch diese Fluidkanäle 9 zu den Sprühdüsen 8, wie dies aus Figur 3 hervorgeht.

Es ist möglich, unterschiedliche Komponenten des Kühl- und Schmiermittels durch unterschiedliche Zuleitungskanäle 5 und Fluidkanäle 9 in den unmittelbar stromauf der Sprühdüsen 8 angeordneten Bereich zu führen und dort, d.h. unmittelbar vor Austritt aus den Sprühdüsen 8, aus einer Emulsion, z.B. aus Öl und Wasser, und aus Druckluft das Kühl- und Schmiermittel zu mischen.

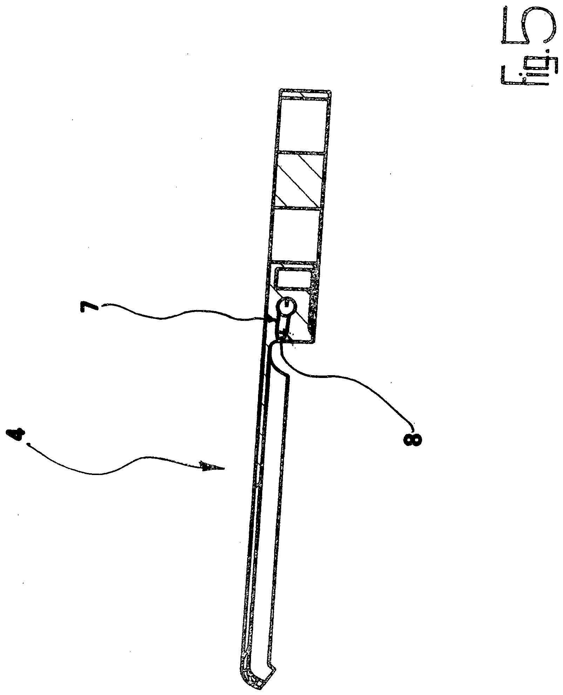

In Figur 5, die eine Schnittdarstellung des Scherenblatts 4 zeigt, ist dargestellt, wie die Sprühdüse 8 der Sprühvorrichtung 7 angeordnet bzw. ausgerichtet ist, um sicherzustellen, dass die Abstrahlung des Kühl- und Schmiermittels in Richtung zur Schneidfläche des Scherenblatts 4 erfolgt.

Im vorstehend anhand der Figuren 1 bis 5 gezeigten und erläuterten Ausführungsbeispiel der Tropfenschere 1 handelt es sich um eine parallel schneidende Tropfenschere 1. In entsprechender Weise ist eine Ausrüstung von Scherenblättern mit Sprühvorrichtungen 7 möglich, wenn es sich um eine angular schneidende Tropfenschere handelt. Die Anbringung der Sprühvorrichtung am Scherenblatt bzw. die Ausgestaltung der Sprühvorrichtung einstückig im Scherenblatt sowie die Versorgung der scherenblattseitigen Sprühvorrichtung durch im Messerarm bzw. im Messerhalter ausgebildete Zuleitungskanäle wird in entsprechender Weise verwirklicht.

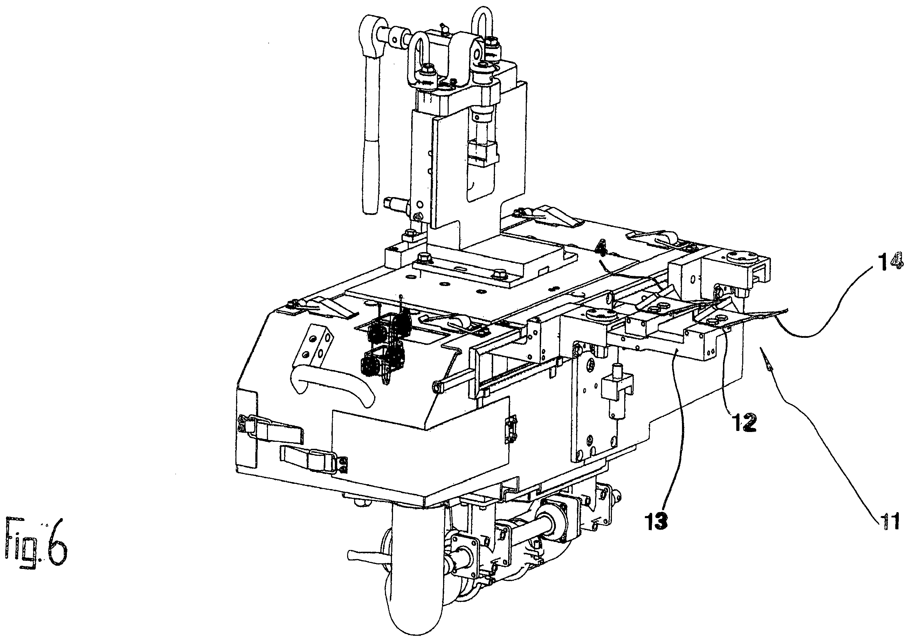

Auch in Figur 6 ist derjenige Bereich einer Glasformmaschine teilweise dargestellt, der unterhalb eines Tropfrings einer Speiservorrichtung angeordnet ist.

In diesem Bereich der Glasformmaschine ist eine zweite Ausführungsform einer erfindungsgemäßen Tropfenschere 11 angeordnet, wobei in der perspektivischen Darstellung der Figur 6 an der Glasformmaschine angebrachte Messerhalter 12, ein die Messerhalter 12 halternder Messerarm 13 und zwei an den Messerhaltern 12 angeordnete Scherenblätter 14 gezeigt sind, wobei diese beiden Scherenblätter 14 mit entsprechend gegenüberliegend angeordneten gleichartigen Scherenblättern die Tropfenschere 11 bilden.

Mittels der Scherenblätter 14 sind unterhalb des in Figur 6 nicht gezeigten Tropfrings Glastropfen von einem durch den Tropfring hindurchtretenden Glasstrang abtrennbar. Hierzu werden im in Figur 6 dargestellten Ausführungsbeispiel die beiden gezeigten Scherenblätter 14 auf zwei gegenüberliegend angeordnete und gelagerte entsprechende Scherenblätter zu bewegt, wobei dann im dargestellten Ausführungsbeispiel zwei Glastropfen von zwei aus einem entsprechend gestalteten Tropfring hindurchtretenden Glassträngen abgetrennt werden.

Im dargestellten Ausführungsbeispiel ist die Tropfenschere 11 als parallel schneidende Tropfenschere 11 ausgestaltet, wobei die einander zugeordneten Scherenblätter 14, die aufeinander zu und voneinander weg bewegt werden, sich auf derselben Bewegungsachse bewegen. Im Falle der in Figur 6 gezeigten Tropfenschere 11 wirkt somit das in der Figur rechts dargestellte Scherenblatt 14 mit einem diesem gegenüberliegend angeordneten entsprechenden Scherenblatt zusammen, wohingegen das in Figur 6 links dargestellte Scherenblatt 14 mit einem entsprechend diesem gegenüberliegend angeordneten Scherenblatt zusammenwirkt.

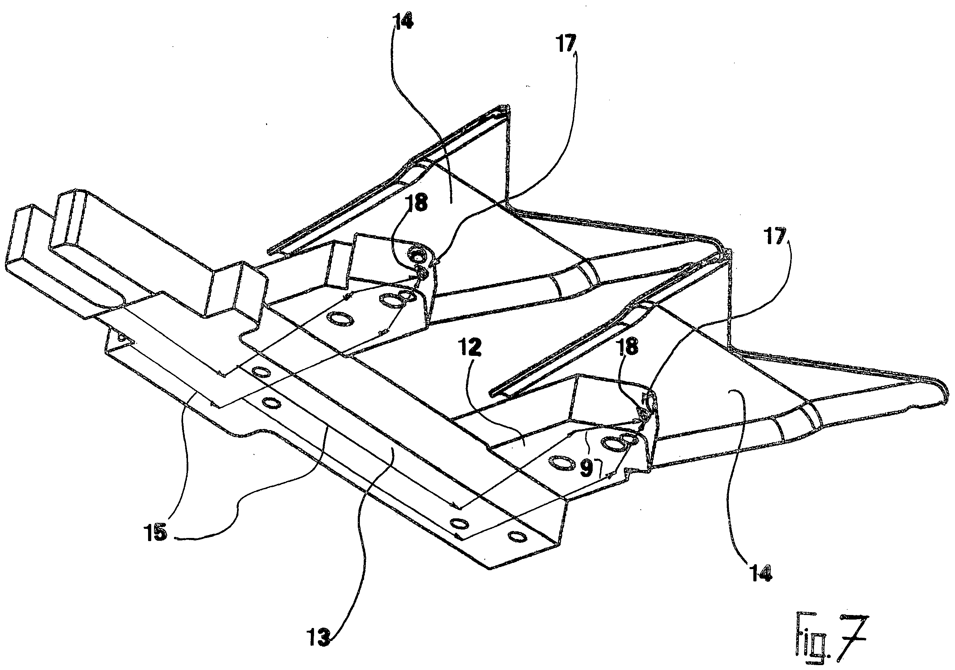

Aus der in Figur 7 gezeigten Unteransicht der Tropfenschere 11 bzw. der Messerhalter 12 derselben, des Messerarms 13 und der Scherenblätter 14 geht hervor, dass der Messerarm 13 von in der Figur 7 durch Pfeile prinzipiell dargestellten Zuleitungskanälen 15 durchdrungen ist, mittels denen zwei am in Figur 7 im Schnitt gezeigten Messerhalter 12 der Tropfenschere 11 vorgesehene Eintrittsöffnungen 16 einer messerhalterseitigen Sprühvorrichtung 17 mit Kühl- und Schmiermittel versorgbar sind.

Die Sprühvorrichtung 17 kann einstückig mit dem Messerhalter 12 ausgestaltet sein oder sie kann lösbar und damit austauschbar mit dem Messerhalter 12 verbunden sein.

Zu der Sprühvorrichtung 17 gehören Sprühdüsen 18, durch die hindurch das Kühl- und Schmiermittel aus der Sprühvorrichtung 17 abgestrahlt wird. Die Sprühdüsen 18 sind in Bezug auf den Messerhalter 12 bzw. das Scherenblatt 14 so angeordnet, dass sie das Kühl- und Schmiermittel auf das jeweilige Scherenblatt 14 richten. Bei dem in den Figuren 6 bis 8 dargestellten Ausführungsbeispiel der Tropfenschere 11 ist die Anordnung der Sprühdüsen 18 der Sprühvorrichtung 17 so vorgenommen, dass sie das Kühl- und Schmiermittel möglichst genau auf die Schneidfläche des jeweiligen Scherenblatts 14 ausrichten.

Da, wie sich insbesondere aus Figur 7 ergibt, die messerhalterseitige Sprühvorrichtung 17 bei dem gezeigten Ausführungsbeispiel unterhalb der Schneidebene des jeweiligen Scherenblatts 14 angeordnet ist, kann das Scherenblatt 14 gekühlt und geschmiert werden, obwohl das Scherenblatt 14 gleichzeitig unmittelbar unterhalb des in den Figuren nicht gezeigten Tropfrings angeordnet sein kann, so dass die Glastropfen unmittelbar unterhalb des Austritts des Tropfrings vom Glasstrang abgetrennt werden können. Da mittels der Sprühdüsen 18 der Sprühvorrichtung 17 das Kühl- und Schmiermittel quasi direkt zur Schneidfläche des Scherenblatts 14 abgestrahlt wird, gerät kein Kühl- und Schmiermittel an den in den Figuren nicht dargestellten Tropfring, so dass keine nachteiligen Eigenschaften auf die Homogenität des Glases verursacht werden, die darauf zurückgehen könnten, dass der Tropfring in unerwünschter Weise gekühlt würde.

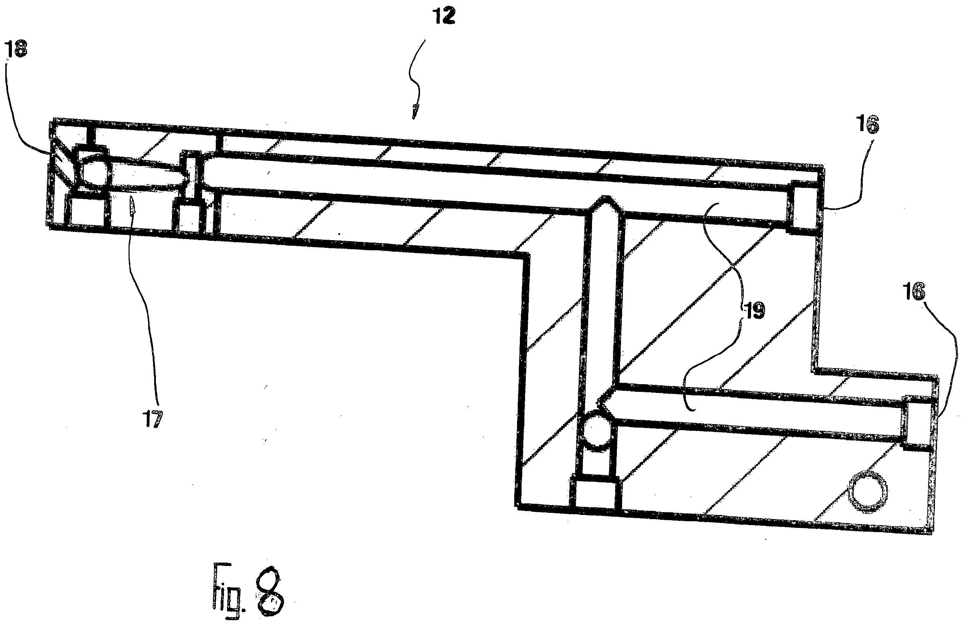

Durch die in Figur 8 gezeigten messerhalterseitigen Eintrittsöffnungen 16 gerät das Kühl- und Schmiermittel in Fluidkanäle 19, und durch diese Fluidkanäle 19 zu den Sprühdüsen 18, wie dies aus Figur 8 hervorgeht.

Es ist möglich, unterschiedliche Komponenten des Kühl- und Schmiermittels durch unterschiedliche Zuleitungskanäle 15 und Fluidkanäle 19 in den unmittelbar stromauf der Sprühdüsen 18 angeordneten Bereich zu führen und dort, d.h. unmittelbar vor Austritt aus den Sprühdüsen 18, aus einer Emulsion, z.B. aus Öl und Wasser, und aus Druckluft das Kühl- und Schmiermittel zu mischen.

In Figur 8, die eine Schnittdarstellung des Messerhalters 12 zeigt, ist dargestellt, wie die Sprühdüse 18 der Sprühvorrichtung 17 angeordnet bzw. ausgerichtet ist, um sicherzustellen, dass die Abstrahlung des Kühl- und Schmiermittels in Richtung zur Schneidfläche des Scherenblatts 14 erfolgt.

Als Scherenblätter 14 der erfindungsgemäßen Tropfenschere 11 können handelsübliche Standardscherenblätter eingesetzt werden, die ober- oder unterhalb der Sprühdüsen 18 am Messerhalter 12 z.B. verschraubbar sind.

Im vorstehend anhand der Figuren 6 bis 8 gezeigten und erläuterten Ausführungsbeispiel der Tropfenschere 11 handelt es sich um eine parallel schneidende Tropfenschere 11. In entsprechender Weise ist eine Ausrüstung von Messerhaltern mit Sprühvorrichtungen möglich, wenn es sich um eine angular schneidende Tropfenschere handelt. Die Anbringung der Sprühvorrichtung am Messerhalter bzw. die Ausgestaltung der Sprühvorrichtung einstückig im Messerhalter sowie die Versorgung der messerhalterseitigen Sprühvorrichtung durch im Messerarm ausgebildete Zuleitungskanäle wird in entsprechender Weise verwirklicht.

## Patentansprüche

1. Tropfenschere für eine Glasformmaschine, die unterhalb eines Tropfrings einer Speiservorrichtung der Glasformmaschine angeordnet ist und die Scherenblätter (4), mittels denen unterhalb des Tropfrings Glastropfen von einem durch den Tropfring hindurchtretenden Glasstrang abtrennbar sind, und eine Sprühvorrichtung (7) für Kühl- und Schmiermittel aufweist, mittels der die Scherenblätter (4) der Tropfenschere (1) kühl- und schmierbar sind, **dadurch gekennzeichnet, dass** Sprühdüsen (8) der Sprühvorrichtung (7) so in bzw. an den Scherenblättern (4) der Tropfenschere (1) ausgebildet oder angeordnet sind, dass das Kühl- und Schmiermittel parallel zur bzw. in der Bewegungsebene der sich aufeinander zu und voneinander weg bewegenden Scherenblätter (4) auf die Scherenblätter (4) richtbar ist.

2. Tropfenschere für eine Glasformmaschine, die unterhalb eines Tropfrings einer Speiservorrichtung der Glasformmaschine angeordnet ist und die Scherenblätter (14), mittels denen unterhalb des Tropfrings Glastropfen von einem durch den Tropfring hindurchtretenden Glasstrang abtrennbar sind, Messerhalter (12), an denen die Scherenblätter (14) gehaltert sind, und eine Sprühvorrichtung (17) für Kühl- und Schmiermittel aufweist, mittels der die Scherenblätter (14) der Tropfenschere (11) kühl- und schmierbar sind, **dadurch gekennzeichnet, dass** Sprühdüsen (18) der Sprühvorrichtung (17) so in bzw. an den Messerhaltern (12) der Tropfenschere (11) ausgebildet oder angeordnet sind, dass das Kühl- und Schmiermittel auf die sich aufeinander zu und voneinander weg bewegenden Scherenblätter (14) richtbar ist.

3. Tropfenschere nach Anspruch 1 oder 2, bei der die Sprühdüsen (8; 18) der Sprühvorrichtung (7; 17) einstückig in den Scherenblättern (4) bzw. den Messerhaltern (12) der Tropfenschere (1; 11) integriert sind.

4. Tropfenschere nach Anspruch 1 oder 2, bei der die Sprühdüsen (8; 18) der Sprühvorrichtung (7; 17) auswechselbar in oder an den Scherenblättern (4) bzw. den Messerhaltern (12) der Tropfenschere (1; 11) angeordnet sind.

5. Tropfenschere nach einem der Ansprüche 1 bis 4, bei der die Sprühdüsen (8; 18) der Sprühvorrichtung (7; 17) durch zumindest einen im bzw. am Scherenblatt (4) bzw. Messerhalter (12) ausgebildeten bzw. angeordneten Fluidkanal (9; 19) mit Schmier- und Kühlmittel versorgbar sind.

6. Tropfenschere nach einem der Ansprüche 1 bis 5, bei der die Sprühdüsen (8; 18) oder der zumindest eine Fluidkanal (9; 19) des Scherenblatts (4) bzw. des Messerhalters (12) der Tropfenschere (1; 11) mittels Zuleitungskanälen (5; 15) mit Kühl- und Schmiermittel versorgbar sind, die in einem dem Scherenblatt (4) bzw. dem Messerhalter (12) zugeordneten Messerarm (3; 13) der Tropfenschere (1; 11) ausgebildet sind.

7. Tropfenschere nach einem der Ansprüche 1 bis 6, bei der die Sprühdüsen (8; 18) der Sprühvorrichtung (7; 17) so angeordnet sind, dass sie das Kühl- und Schmiermittel genau auf die Schneidflächen bzw. Schneiden der Scherenblätter (4; 14) ausrichten.

8. Tropfenschere nach Anspruch 6 oder 7, bei der eine Emulsion und Druckluft des Kühl- und Schmiermittels den Sprühdüsen (8; 18) durch voneinander getrennte Fluid- (9; 19) und Zuleitungskanäle (5; 15) zuführbar und an den Sprühdüsen (8; 18) mischbar sind.

9. Tropfenschere nach einem der Ansprüche 2 bis 8, deren Scherenblätter (14) als Standardscherenblätter ausgebildet sind.

10. Tropfenschere nach Anspruch 9, deren als Standardscherenblätter ausgebildete Scherenblätter (14) oberhalb oder unterhalb der Sprühdüsen (18) am Messerhalter (13) anord- und befestigbar, vorzugsweise verschraubbar, sind.
